# EUROPEAN PATENT APPLICATION

(11) **EP 1 818 173 A1**
(43) Date of publication of application: **15.08.2007**
(21) Application number: 07002812.1
(22) Date of filing: 09.02.2007
(51) Int. Cl.: B32B 37/22

(54) **Laminating machine for documents**

(30) Priority: 09.02.2006 ES 200600286 U
(71) Applicant: Construcciones Mecanicas Calduch, 08970 Sant Joan Despi (Barcelona) (ES)
(72) Inventor: Calduch i Galofre, Xavier, 08970 Sant Joan Despi (Barcelona) (ES)
(74) Representative: Thurgood, Alexander John

(57) **Abstract**

This laminating machine for documents is formed by a casing (1) on which are mounted: a dispensing reel (4) of plastic film (41), the rollers for laminating (51,52), the guide rollers (53), the rollers (54,55) of the group of feed and the rollers (56,57) for separation of the laminated documents. Said casing (1) comprises at its front a top entry point (2) for the feeding of the documents to be laminated and a lower exist point (3) for the delivery of the laminated documents. The rollers for laminating (51,52), the guide rollers (53), the rollers (54,55) of the group of feed and the rollers (56,57) for separation of the laminated documents form a track in the shape of a "C" between the upper entry point (2) and the lower exit point (3).

## Description

### Object of the Invention

The present invention refers to a laminating machine for documents.

### Background of the Invention

Nowadays different laminating machines for documents are available on the market which have a frontal entry point for the introduction of the documents to be laminated, a dispensing reel of adhesive plastic film, a heated roller and a press roller set facing each other for the fixing of the plastic film onto the documents fed into the machine, some guide rollers, a group of feed rollers composed of a driving roller and by a press roller used to drag the sheet of plastic film applied to the documents and a separating group of rollers composed of a motorized roller and by a press roller which, when activated, breaks the plastic film and separates the previously laminated documents.

In existing laminating machines, the successive rollers (for laminating, guiding, feeding and separation) are arranged and aligned in a lengthways direction, the introduction of the documents to be laminated being done by the front section of the machine and the delivery of the documents, laminated and separated, by the rear section of the machine.

This disposition of alignment of the rollers in a lengthways direction, impedes the possibility of reducing the length of the casing, meaning that these types of laminating machines are quite wide and can be inconvenient for the operator who has to do the feeding of the documents at the front of the machine and the withdrawal of the laminated documents at the rear of the machine.

Laminating machines of this type are designed for high production and are costly meaning they are adequate for large printers or packing companies which undertake the laminating of a large number of documents.

However, this type of laminating machines is unsuitable due to their high cost, dimensions and capabilities, for small copy shops and digital presses that are found in urban areas and that do not usually undertake the laminating of a large number of documents.

### Description of the Invention

The laminating machine for documents object of this invention presents some useful features designed to importantly reduce the dimensions of the machine, especially its length, by means of varying of the placement of the successive rollers, and of the entering and exiting of documents that are placed in the front of the machine, improving access for the operator or user of the machine.

This laminating machine for documents includes a casing which has an upper entry point for the feeding of the documents to be laminated and of a lower exit point for the delivery of the laminated documents.

The casing includes two side vertical and noticeably parallel supports fixed one to the other by intermediate elements, the rollers for laminating, the guide rollers, the feed rollers and the rollers for the separation of the laminated documents mounted on the above mentioned supports, the above mentioned rollers forming a track in the shape of a "C" arranged between the upper front entry point and the lower front exit point of the laminating machine.

In its rear section, the laminating machine has some protective plates, preferably of transparent material, which cover the path or track in the shape of a "C" with the continuous sheet of film which acting as a support while the documents held to it by the laminating rollers pass through the machine.

The laminating machine includes, between the lateral supports, in correspondence with the upper entry point, a table for the supply of the documents to be laminated and, in correspondence with the lower exit point, a ramp for the delivery of the laminated documents. The above mentioned ramp has some buffers for the holding of the laminated documents ready for delivery.

This laminating machine includes, as is usual, a motor unit for the operation of the rollers of the feed rollers and of the separating group of rollers with determined transmission rates, so that when the separating rollers are used, these rollers move the sheet of film at a speed superior to that of the feed rollers, causing the tearing of the film in the area between the successive laminated documents and the effective separation of the laminated documents.

The separation and the momentary approximation of the separating rollers of the laminated documents are pneumatically controlled, and programmable by means of a control panel, depending on the format of the documents to be laminated.

### Description of the Figures

To complement the description being undertaken and in order to ease understanding of the characteristics of the invention, the present description includes a set of drawings in which, to illustrate and not limit, the following has been represented:

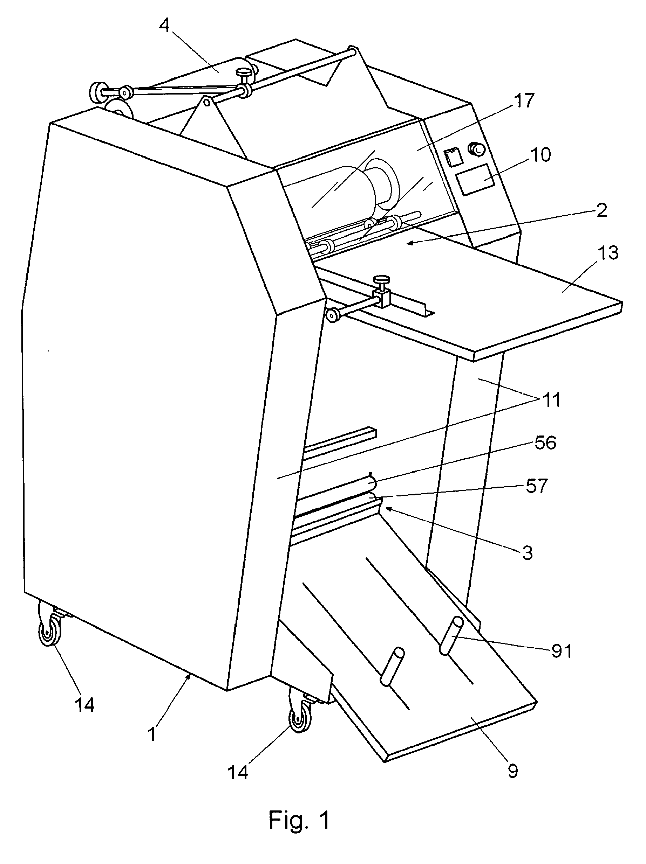

- Figure 1 shows a frontal perspective view of the laminating machine for documents object of this invention.
- Figure 2 shows a schematic profile view of the laminating machine, with a cutaway section to allow the observation of the placement of the different groups of rollers along the path or track of the plastic film between the entry and the exit points shown at the front of the machine.

### Preferred usage of the Invention

In the example of usage shown in the figures, the laminating machine for documents includes a casing (1) composed of two side vertical and parallel supports (11) which are fixed by a low base (12) and a front table (13) for the feeding of the documents to be laminated.

The above mentioned casing comprises, in correspondence with the table (13), a top entry point (2) orientated towards the front of the laminating machine and, in the lower front area, an exit point (3) for the delivery of the laminated documents.

On the side supports are mounted: the dispensing reel (4) of the plastic film (41), the rollers for laminating (51, 52), the guide rollers (53), the rollers (54, 55) of the group of feed and the rollers (56, 57) for separation of the laminated documents.

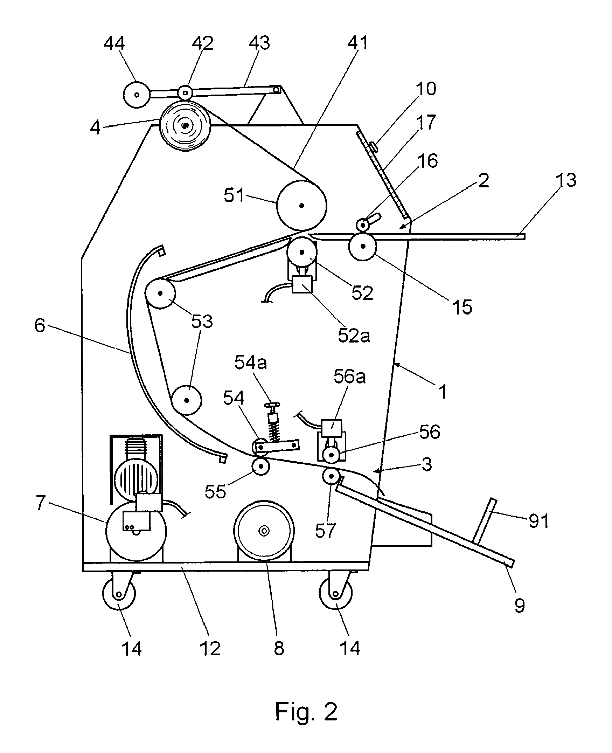

As can be observed in figure 2, the above mentioned rollers form a track in the shape of a "C", arranged between the upper front entry point (2) and the lower front exit point (3) of the laminating machine, said track being covered at the rear of the laminating machine by some protective plates (6) of a transparent material.

The roller (51) is heated with the purpose of warming the film (41) used for laminating the top face of the documents that are fed from the table (13). The axis of the roller (52), used for pressing the documents to be laminated and the film (41) against the heated roller (51), is mounted on some movable supports, driven by means of pneumatic cylinders (52a) that allow the changing of the pressure exerted by the above mentioned roller (52) against the heated roller (51).

The guide rollers (53) are of the free moving type, the laminated documents moving with the film (41) due to the action of the rollers (54, 55).

The roller (55) turns at a speed determined by the motor (71) to which it is connected by a conventional transmission, not represented. The pressing roller (54) is mounted on a swinging support to which it is associated, by means of a spring, a handle (54a) for regulating the pressure of the roller (54).

The roller (57) of the separation group of the laminated documents is connected to the motor (8) by means of a transmission, not represented, turning the above mentioned roller (57) at a substantially higher speed than the feed rollers (54, 55).

The roller (56) is mounted on movable supports, activated by means of pneumatic cylinders (56a) causing the approximation or withdrawal in a controlled fashion of the above mentioned roller (56) with regard to the mobile roller (57) so as to cause the tearing of the film (41) in the area included between the successive laminated documents and the separation of the successive laminated documents before being delivered to the ramp (9) at the low exit point (3). This ramp (9) includes some buffers (91) for the retention of the laminated documents in a delivery position.

The operational parameters of the laminating machine can be adjusted by means of the control panel (10) placed in the front of the casing (1).

The base (12) of the casing (1) has wheels (14) for moving or relocation of the laminating machine by the user.

To avoid the uncontrolled turning of the reel (4) and an excessive freeing of the film (41), the laminating machine has a brake comprised of a wheel (42) that rests on the reel (4) and that is associated with a swinging arm (43) with a counterweight (44) at one end.

The laminating machine can be equipped with an automatic document feeder, schematically represented by some motorised rollers (15) that stand out partially across the table (13) and by some top rollers (16) connected to some swinging arms.

The top part of the entry point (2) is covered by a transparent protective plate (17) which prevents hands being placed near the rollers (51, 52) and avoids the risk of accidents by objects becoming trapped.

Having sufficiently described the nature of the invention, as well as an example of referred usage, it is certified to all concerned that the materials, form, size and placement of the described elements will be able to be modified, only when this does not suppose an alteration of the essential characteristics of the invention claimed hereafter.

## Claims

1. Laminating machine for documents of the type which includes a casing (1) on which are mounted: a dispensing reel (4) of plastic film (41), rollers for laminating (51, 52), guide rollers (53), the group of feed rollers (54, 55) and the rollers (56, 57) for the separation of the laminated documents; **characterized by** the fact that the casing (1) includes at its front an upper entry point (2) for the feeding of the documents to be laminated and a lower exit point (3) for the delivery of the laminated documents and by the fact that the rollers for laminating (51, 52), the guide rollers (53), the rollers (54, 55) of the group of feed rollers and the rollers (56, 57) for the separation of the laminated documents form a track in the shape of a "C" between the upper entry point (2) and the lower exit point (3).

2. Laminating machine, according to claim 1, **characterized by** the fact that the casing (1) includes two side vertical and parallel supports (11) fixed one to the other by a low base (12) and a front table (13) for the feeding of the documents to be laminated.

3. Laminating machine, according to any of claims 1 and 2, **characterized by** the fact that, at the rear, the casing includes protective plates (6) of transparent material which cover, at least, a portion of the track defined by the rollers (51..., 57).

4. Laminating machine, according to claim 1, **characterized by** the fact that the exit point (3) has a ramp (9) with some buffers (91) for the retention of the laminated documents in a delivery position.

5. Laminating machine, according to claim 1, **characterized by** the fact that the exit point (3) has a table for the introduction of the documents to be laminated in correspondence with the upper entry point (2).

6. Laminating machine, according to claim 2, **characterized by** the fact that the base (12) includes wheels (14).
